(19) Europäisches Patentamt
European Patent Office
Office européen des brevets

(11) Publication number: **0 107 405**
**A1**

(12) **EUROPEAN PATENT APPLICATION**

(21) Application number: **83305934.8**

(22) Date of filing: **30.09.83**

(51) Int. Cl.³: **G 06 F 15/336**

(30) Priority: **30.09.82 US 430173**

(43) Date of publication of application: **02.05.84**
**Bulletin 84/18**

(84) Designated Contracting States: **DE FR GB**

(71) Applicant: **HONEYWELL INC., Honeywell Plaza, Minneapolis Minnesota 55408 (US)**

(72) Inventor: **Haugen, Paul R., 1819 West Old Shakopee Road, Bloomington Minnesota 55431 (US)**

(74) Representative: **Harman, Michael Godfrey et al, Honeywell Control Systems Ltd. Charles Square, Bracknell Berkshire RG12 1EB (GB)**

(54) **Correlation computation.**

(57) A correlation computation system takes a sequence of x values and a sequence of y values, provides a set of sums of products of cross-related x and y values. In known apparatus, this is done by means of two shift registers for the two sequence of values, and a sequence of multiplyaccumulate devices, in a ladder-like structure with each multiply-accumulate device forming a «rung» fed from a respective stage of each shift register forminv the ladder sides. Since the relative shift between the two shift registers on each cycle is 2, alternate stages have to be empty and each multiply-accumulate device is active only on alternate cycles. In the present invention, each shift register stage (11, 1 to n; 12, 1 to n) feeds two multiplyaccumulate devices (13), which thus form a zig-zag double rung structure. The shift register lenghts are halved, with all stages containing x or y values, and the computation time is also halved, with all multiply-accumulate devices active on every cycle.

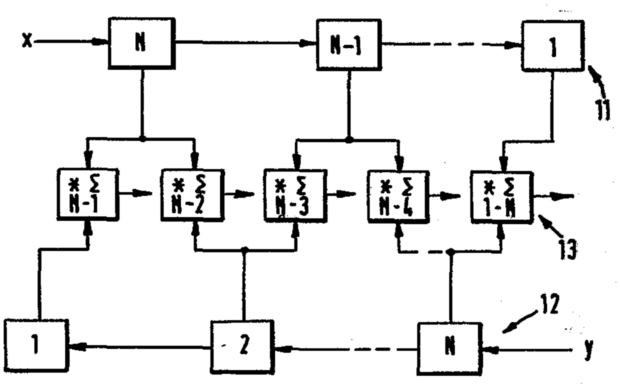


EP 0 107 405 A1

# CORRELATION COMPUTATION

The present invention relates to the high speed digital calculation of correlations.

Many problems, particularly those in the area of signal processing, require the calculation of the correlation of two functions. Given two functions, X and Y, the correlation may be approximated through digital processes. In order to do this the functions must be sequentially sampled to produce the series ($x_1$, $x_2$, $x_3$, ..., $x_s$) and ($y_1$, $y_2$, $y_3$, ..., $y_t$). Using these series the correlation may be approximated as a series of summations of products of the elements of the X and Y series. Such a series of summations can be represented as

$$\left(\sum_j x_j y_{j-N+1},\ \sum_j x_j y_{j-N+2},\ \sum_j x_{j-1} y_{j-N+2},\ \sum_j x_{j-1} y_{j-N+3},\ \ldots,\ \sum_j x_{j-N+2} y_j,\ \sum_j x_{j-N+1} y_j\right)$$

where the range of values of j over which the summation is performed is representative of the timer period over which the correlation is to be calculated and the value of N is a measure of the bandwidth desired for the particular calculation. For convenience, these sums will be abbreviated as $S_{N-1}$, $S_{N-2}$, ... $S_{1-N}$; the S subscript is the X subscript minus the Y subscript.

The correlation series described above may be produced in various ways. On a general purpose computer each summation may be calculated from the values of the X and Y series. If the time-bandwidth product is large, or if a large number of x and y values are to be used, however, the time required to perform these calculations could be so large that real time processing of rapidly accumulating data is precluded. Such is often the case in the area of signal processing.

Parallel processing schemes provide methods of calculating a correlation series such as that shown above more

rapidly. One such approach of the prior art is the use of a linear array of multiply-accumulate devices. A multiply-accumulate device has two data inputs, and is designed to accept pairs of numbers as input data and to provide as output the sums of the products of consecutive pairs of numbers used.

In order to provide the most efficient processing 2N-1 multiply-accumulate devices are required, where N is the same as above. Additionally this known system requires two shift registers, each having 2N-1 stages. Each multiply-accumulate device is coupled to two respective stages, one from each shift register.

In operation the values $x_j$ are inserted into one shift register and advanced through it (say from left to right) while the values of $y_j$ are inserted into the other shift register and advanced through it in the opposite direction (right to left). During a cycle of the apparatus each multiply-accumulate device which is in use during that cycle receives an x value at one input and a y value at the other input.

One of the disadvantages of this system is that not all multiply-accumulate devices are used during any one cycle. The reason for this is that each x value must appear opposite each y value in turn, to be multiplied by that y value and the product accumulated. To achieve this, the x and y values are entered only in alternate stages of their respective shift registers, and the remaining stages of these shift registers are empty. Thus in a particular cycle, a particular x value will be multiplied by some particular y value and accumulated in a particular multiply-accumulate device. For the next cycle, the x value will be shifted one stage right to be opposite the next y value, which has been shifted one stage left, and will be multiplied by that y value in the multiply-accumulate device adjacent to the one which was operative in the preceding cycle.

This known system, therefore, utilizes only approximately half the stages of the shift register for actually storing the x and y values, and only half the multiply-accumulate devices are operative in any one cycle. Each cycle involves a right shift of the X values by one stage and a left shift of the Y values by one stage, and there is therefore a relative shift, between the two shift registers, of 2 stages per cycle. Thus if all stages were used for storing the x and y values, half the x value and y value pairings would not occur.

Accordingly the present invention provides a correlation computation system comprising a pair of shift registers through which x and y values are shifted in opposite directions and a sequence of multiply-accumulate devices each fed from a respective pair of stages of the two shift registers, whereby each multiply-accumulate device generates a sum of products of cross-related x and y values, characterized in that each shift register stage (apart from the two end stages) feeds two adjacent multiply-accumulate devices.

An embodiment of the invention will now be described, by way of example, with reference to the drawings, in which:

Figure 1 is a block diagram of a known array for the calculation of correlations,

Figure 2 is a block diagram of a preferred embodiment of the invention.

INTRODUCTORY SUMMARY

The present system provides a computational array including two shift registers. Each stage of each shift register (apart from one stage at each end) provides the value contained therein to two multiply-accumulate devices. In this manner 2N-1 summations may be performed using two N stage shift registers. Thus fewer shift register stages are required, leading to a proportionate space saving. Additionally, the system of the present invention requires less time to calculate a correlation because values may be loaded into consecutive shift register stages and all multiply-accumulate devices operate during every cycle.

DETAILED DESCRIPTION

Figure 1 shows the prior art system. There is an X shift register 1, a Y shift register 2, and a set of multiply-accumulate devices 3. The X shift register comprises alternately unprimed and primed stages N,(N-1)', (N-1), (N-2)', ... 1, with successive x values occupying alternate stages and shifting rightwards from the unprimed to the primed stages and from the primed to the unprimed stages alternately. The Y shift register comprises corresponding stages in the opposite sequence. The multiply-accumulate devices are labelled with the difference between the labels of the associated X and Y shift register stages.

On one cycle, all the unprimed stages (say) of the shift registers contain x and y values, and alternate multiply-accumulate devices N-1, N-3, --- 1-N perform their multiplying and accumulating. On the next cycle, all the primed shift register stages contain x and y values, and the remaining multiply-accumulate devices perform their multiplying and accumulating. Successive cycles continue to alternate in this way.

Figure 2 shows the system of the present invention. As in the Figure 1, two shift registers are used, but in the present system each such shift register has N stages rather than 2N-1 as in the prior art. The X shift register 11 has stages N, N-1, ... 1 while the Y shift register 12 has stages 1, 2, ... N as shown. Additionally, there is a series 13 of multiply-accumulate devices N-1, N-2, N-3, N-4, ... 1-N. Thus there are two N stage shift registers and 2N-1 multiply-accumulate devices.

It will be seen that, apart from two end stages in the shift registers (which may be both in one shift register or one in each), each shift register stage feeds two multiply-accumulate devices. These devices are labelled, as in Figure 1, with the difference between the numbers of the X and Y register stages which feed them. For simplicity, the outputs of the multiply-accumulate devices are omitted in

this figure; the outputs have the stage numbers as subscripts, just as in Figure 1.

It is evident that, on each cycle, each x value is multiplied by a pair of adjacent y values and the products are accumulated in a pair of multiply-accumulate devices. On the shift to the next cycle, the 2-step relative shift between the X and Y registers will take place; but because of the 2 multiplications for each value, this will result in any given value undergoing exactly the required next 2 multiplications on that next cycle.

CLAIMS

1. A correlation computation system comprising a pair of shift registers (11, 12) through which x and y values are shifted in opposite directions and a sequence of multiply-accumulate devices (13) each fed from a respective pair of stages of the two shift registers, whereby each multiply-accumulate device generates a sum of products of cross-related x and y values, characterized in that each shift register stage (11, 1 to N; 12, 1 to N) (apart from two end stages) feeds two adjacent multiply-accumulate devices.

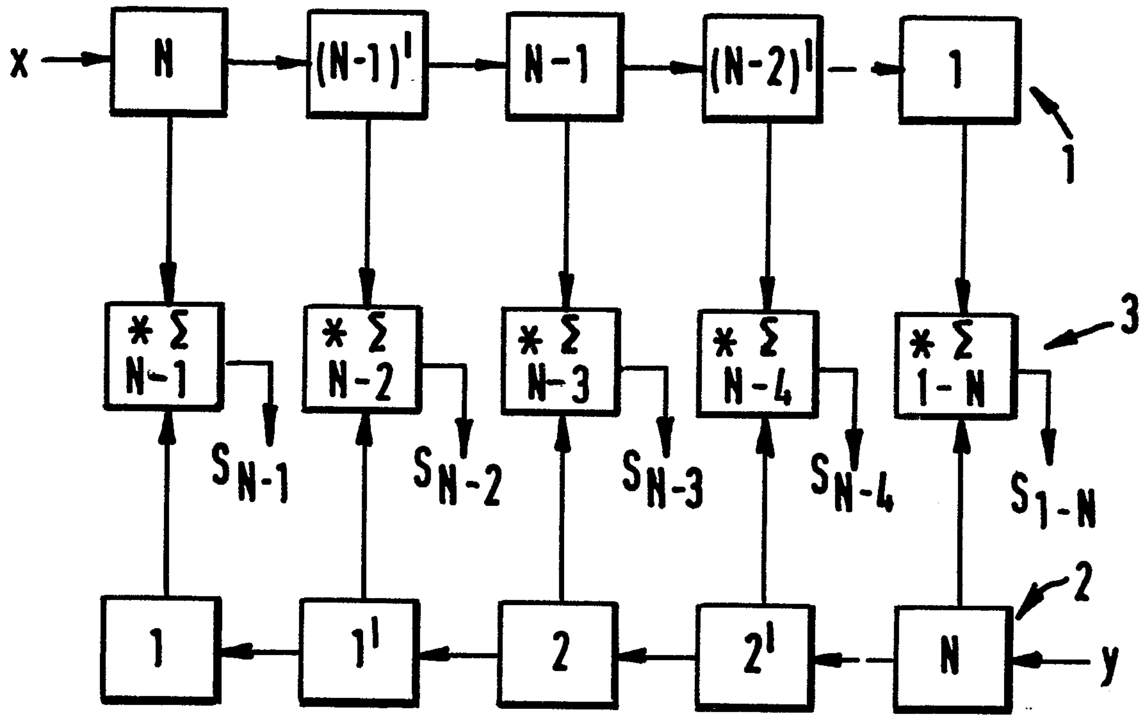
x
N
(N-1)'
N-1
(N-2)'
1
1
*Σ N-1
*Σ N-2
*Σ N-3
*Σ N-4
*Σ 1-N
3
$S_{N-1}$
$S_{N-2}$
$S_{N-3}$
$S_{N-4}$
$S_{1-N}$
1
1'
2
2'
N
2
y

FIG.1

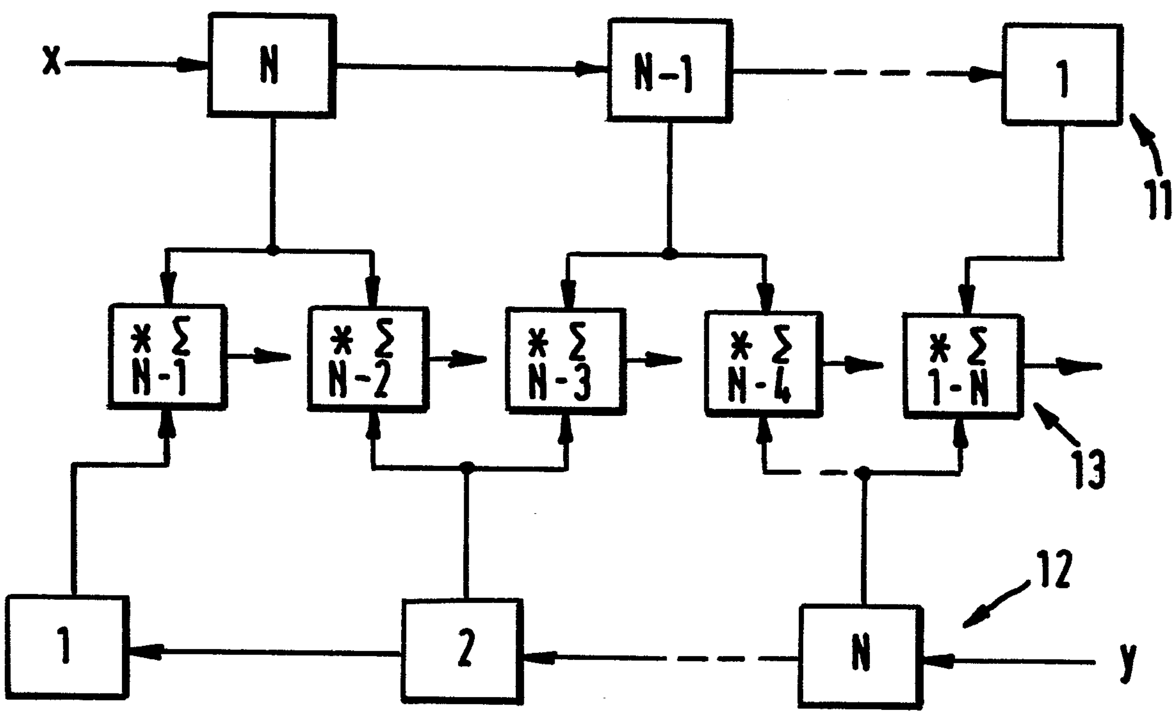
x
N
N-1
1
11
*Σ N-1
*Σ N-2
*Σ N-3
*Σ N-4
*Σ 1-N
13
12
1
2
N
y

FIG.2

European Patent Office

# EUROPEAN SEARCH REPORT

0107405

Application number

EP 83 30 5934

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | US-A-4 080 660 (J. CONSTANT) * Column 5, lines 41-68; figure 1 * | 1 | G 06 F 15/336 |
| A | US-A-3 878 381 (A. BRODER et al.) * Column 4, line 65 - column 5, line 38; figure 7 * | 1 | |
| A | INTERNATIONAL CONFERENCE ON CHARGE COUPLED DEVICES, CONFERENCE 3, September 1976, pages 238-258, Edingborough, GB I. LAGNADO et al.: "A CCD analog and digital correlator" * Page 248, line 1 - page 250, line 32; figures 1,6,8 * | 1 | |
| | | | TECHNICAL FIELDS SEARCHED (Int. Cl. 3) |
| | | | G 06 F 15/336 |

The present search report has been drawn up for all claims

| Place of search | Date of completion of the search | Examiner |
|---|---|---|
| THE HAGUE | 11-01-1984 | BAMBRIDGE J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document